# EUROPÄISCHE PATENTSCHRIFT

(11) **EP 3 075 452 B1**
(45) Veröffentlichungstag und Bekanntmachung des Hinweises auf die Patenterteilung: **27.03.2019**
(21) Anmeldenummer: 16000346.3
(22) Anmeldetag: 11.02.2016
(51) Int. Cl.: B02C 17/16, B02C 17/10, B02C 17/18, B66F 7/06, B62B 3/10, B66F 9/065

(54) **HANDHABUNGSVORRICHTUNG ZUR WARTUNG VON RÜHRWERKSKUGELMÜHLEN UND VERFAHREN ZUM WARTEN EINER RÜHRWERKSKUGELMÜHLE**
HANDLING DEVICE FOR MAINTENANCE OF AGITATOR BEAD MILLS AND METHOD FOR PERFORMING MAINTENANCE ON AN AGITATOR BEAD MILL
DISPOSITIF DE MANIPULATION DESTINE A L'ENTRETIEN DE BROYEURS-AGITATEURS A BOULETS ET PROCEDE D'ENTRETIEN D'UN BROYEUR-AGITATEUR A BOULETS

(30) Priorität: 02.04.2015 DE 102015105104
(43) Veröffentlichungstag der Anmeldung: 05.10.2016
(73) Patentinhaber: NETZSCH-Feinmahltechnik GmbH, 95100 Selb (DE)
(72) Erfinder: Weiland, Lars-Peter, 95173 Schönwald (DE)

(56) Entgegenhaltungen:
- CN-Y- 201 427 544
- DE-A1- 2 619 273
- DE-A1- 19 913 243
- US-A- 3 542 300

## Beschreibung

Die vorliegende Erfindung betrifft eine Handhabungsvorrichtung zur Wartung von Rührwerkskugelmühlen und ein Verfahren zum Warten einer Rührwerkskugelmühle gemäß den Merkmalen der Oberbegriffe der Ansprüche 1 und 13.

### Stand der Technik

Die Erfindung betrifft die erleichterte Wartung von Rührwerkskugelmühlen mit einem liegend angeordneten Mahlbehälter.

Eine derartige Vorrichtung ist aus der US3542300 bekannt.

Im Rahmen eines Produktwechsels ist beispielsweise ein Austausch der Mahlkörper erforderlich, da die Größe der Mahlkörper auf das jeweils zu vermahlende Produkt abgestimmt ist. Weiterhin kann es notwendig sein, den Boden des Mahlbehälters zu lösen und anschließend den Mahlbehälter komplett von der Rührwelle abnehmen zu müssen, um an dieser beispielsweise Wartungsarbeiten durchzuführen. In der Regel ist es nur bei kleinen Labormühlen für den Benutzer einfach möglich, den Mahlbehälterboden zu lösen und den Mahlbehälterboden und den Mahlbehälter abzunehmen. Bei größeren Mühlen sind insbesondere das Gewicht von Mahlbehälterboden und Mahlbehälter problematisch.

Aus dem Stand der Technik ist daher die Verwendung von Hilfs- Gestellen zum Transport von Teilen der Rührwerkskugelmühle bekannt, die insbesondere über Räder beweglich sind. Der Benutzer löst zuerst den Mahlbehälterboden, legt diesen auf einem ersten beweglichen Hilfs- Gestell ab und fährt dieses zu einem Lagerplatz. Anschließend verwendet der Benutzer ein zweites Hilfs- Gestell, um den demontierten Mahlbehälter an einen Lagerplatz zu transportieren. Oder aber der Benutzer legt den Mahlbehälterboden am Lagerplatz ab und verwendet das erste Hilfs- Gestell, um nunmehr den Mahlbehälter der Rührwerkskugelmühle abzunehmen und extern zu lagern.

Zum Auffangen der Mahlkörper, die beispielsweise über den Produktauslass des Mahlbehälters abgelassen werden, sind aus dem Stand der Technik Mahlkörperrutschen und Mahlkörperauffangwannen bekannt.

Die Aufgabe der Erfindung besteht darin, eine Handhabungsvorrichtung zur Erleichterung der Wartung von Rührwerkskugelmühlen bereitzustellen.

Die obige Aufgabe wird durch eine Handhabungsvorrichtung und ein Verfahren zum Warten einer Rührwerkskugelmühle gelöst, die die Merkmale in den Patentansprüchen 1 und 12 umfassen. Weitere vorteilhafte Ausgestaltungen werden durch die Unteransprüche beschrieben.

### Beschreibung

Die Erfindung betrifft eine Handhabungsvorrichtung zur Wartung von Rührwerkskugelmühlen mit einem liegend angeordneten Mahlbehälter. Insbesondere weist der Mahlbehälter eine zylindrische oder konische Form auf. Die Handhabungsvorrichtung ist insbesondere dafür vorgesehen, dem Benutzer die Demontage und Montage der Rührwerkskugelmühle und gegebenenfalls die Zwischenlagerung von Maschinenteilen der Rührwerkskugelmühle zu erleichtern.

Zu diesem Zweck umfasst die Handhabungsvorrichtung ein Transportmittel, um die Handhabungsvorrichtung einfach an geeigneten Arbeits- und / oder Lagerplätzen positionieren zu können. Weiterhin umfasst die Handhabungsvorrichtung mindestens eine Aufnahmeeinheit für Maschinenteile der Rührwerkskugelmühle. Das Transportmittel ist lösbar mit der Aufnahmeeinheit verbunden, so dass die Aufnahmeeinheit und das Transportmittel nach Bedarf auch einzeln genutzt werden können.

Gemäß einer besonders bevorzugten Ausführungsform der Erfindung ist vorgesehen, dass in einem ersten Arbeitszustand der Handhabungsvorrichtung eine Wirkverbindung zwischen der Aufnahmeeinheit und dem Transportmittel ausgebildet ist. Insbesondere ist dabei die Aufnahmeeinheit derart am Transportmittel angeordnet, dass die Aufnahmeeinheit und das Transportmittel gemeinsam beweglich sind.

Weiterhin kann die Handhabungsvorrichtung einen zweiten Arbeitszustand einnehmen, in dem die Wirkverbindung zwischen der Aufnahmeeinheit und dem Transportmittel gelöst ist, so dass das Transportmittel unabhängig von der Aufnahmeeinheit bewegt werden kann.

Gemäß der Erfindung ist vorgesehen, dass die Aufnahmeeinheit mindestens eine Aufnahmevorrichtung für mindestens ein Maschinenteil der Rührwerkskugelmühle umfasst. Beispielsweise kann es sich hierbei um eine erste Aufnahmevorrichtung für den Mahlbehälterdeckel beziehungsweise Mahlbehälterboden der Rührwerkskugelmühle handeln.

Insbesondere kann vorgesehen sein, dass die Handhabungsvorrichtung derart an der Rührwerkskugelmühle positioniert wird, dass der Mahlbehälterdeckel beziehungsweise Mahlbehälterboden durch die erste Aufnahmevorrichtung der Handhabungsvorrichtung gehalten wird. Nach Lösen von Befestigungsmitteln kann der Mahlbehälterdeckel beziehungsweise Mahlbehälterboden leicht vom Mahlbehälter abgenommen werden, indem die Handhabungsvorrichtung mit dem gelösten Mahlbehälterdeckel beziehungsweise Mahlbehälterboden von der Rührwerkskugelmühle entfernt und in eine neue Position verfahren wird.

Ferner ist eine zweite Aufnahmevorrichtung für den Mahlbehälter der Rührwerkskugelmühle vorgesehen. Die zweite Aufnahmevorrichtung ist als Auflage ausgebildet, auf die der Mahlbehälter aufliegt und die ein Wegrollen des Mahlbehälters verhindert.

Ferner ist eine dritte Aufnahmevorrichtung insbesondere als oben offener Kasten, beziehungsweise Aufnahmewanne, für die Mahlkörper ausgebildet. Bei der Wartung einer Rührwerkskugelmühle, beispielsweise bei der Wartung der Rührwelle, müssen der Mahlbehälterboden und der Mahlbehälter entfernt werden. Die im Mahlbehälter befindlichen Mahlkörper müssen im Zuge der Demontage aus dem Mahlbehälter abgelassen und gesammelt werden, wofür die Aufnahmewanne vorgesehen ist.

Gemäß der Erfindung sind die erste und / oder die zweite Aufnahmevorrichtung in und / oder auf der Aufnahmewanne angeordnet. Besonders bevorzugt sind die erste und / oder die zweite Aufnahmevorrichtung lose oder lösbar angeordnet, so dass die Position der ersten und / oder zweiten Aufnahmevorrichtung an die jeweilige Rührwerkskugelmühle, insbesondere an die Größe des Mahlbehälters der Rührwerkskugelmühle, angepasst werden kann. Gegebenenfalls kann es auch vorgesehen sein, für unterschiedlich große Mahlbehälter auch unterschiedliche Aufnahmevorrichtungen vorzusehen.

In diesem Zusammenhang ist es denkbar, die Aufnahmewanne als ausziehbare Wanne zu gestalten, so dass die Größe einer Horizontalfläche der dritten Aufnahmevorrichtung ebenfalls an die Größe des Mahlbehälters angepasst werden kann.

Gemäß einer Ausführungsform der Erfindung ist vorgesehen, dass das Transportmittel der Handhabungsvorrichtung höhenverstellbar ist. Insbesondere umfasst das Transportmittel eine Horizontalebene, wobei die Höhe beziehungsweise Vertikalposition der Horizontalebene variabel eingestellt werden kann. Eine stufenlose Einstellung ist beispielsweise über einen Scherenhubmechanismus möglich. Gemäß einer bevorzugten Ausführungsform ist das Transportmittel als Scherenhubtisch mit Transportrollen ausgebildet.

Gemäß einer Ausführungsform der Erfindung ist vorgesehen, dass das Transportmittel für sich genommen, das heißt ohne Wirkverbindung mit der Aufnahmeeinheit, für die Aufnahme und / oder den Transport und / oder der Zwischenlagerung von mindestens einem weiteren Maschinenteil der Rührwerkskugelmühle dienen kann. Beispielsweise kann nach Bedarf auf der Horizontalebene des Transportmittels mindestens eine Aufnahmevorrichtung für die Rührwelle der Rührwerkskugelmühle angeordnet werden.

Gemäß einer Ausführungsform der Erfindung sitzt die Aufnahmeeinheit in dem ersten Arbeitszustand zumindest teilweise auf der Horizontalebene des Transportmittels auf. Vorzugsweise sitzt die Aufnahmewanne auf der Horizontalebene des Transportmittels auf. Dadurch wird insbesondere die Wirkverbindung zwischen Aufnahmeeinheit und Transportmittel hergestellt. Durch eine Höhenverstellung des Transportmittels kann zudem die Höhe der Aufnahmeeinheit im ersten Arbeitszustand an die benötigte Arbeitshöhe zur Montage oder Demontage von Maschinenteilen der Rührwerkskugelmühle angepasst werden.

In einem zweiten Arbeitszustand ist die Höhe der horizontalen Auflagefläche des Transportmittels dagegen derart eingestellt, dass ein Abstand zwischen der Horizontalebene des Transportmittels und der Aufnahmeeinheit ausgebildet ist. In dem zweiten Arbeitszustand ist die Aufnahmeeinheit unbeweglich ausgebildet. Das heißt, in dem zweiten Arbeitszustand ist die Aufnahmeeinheit der Handhabungsvorrichtung ortsfest an der jeweiligen Position angeordnet. Dagegen kann das Transportmittel in dem zweiten Arbeitszustand unabhängig von der Aufnahmeeinheit verfahren werden. Insbesondere ist es möglich, das Transportmittel mittels der Transportrollen an unterschiedliche Positionen an der Rührwerkskugelmühle zu verfahren oder von der Rührwerkskugelmühle zu entfernen.

Die Erfindung betrifft weiterhin ein Verfahren zum Warten einer Rührwerkskugelmühle unter Verwendung einer vorbeschriebenen Handhabungsvorrichtung. Gemäß einer Ausführungsform der Erfindung ist vorgesehen, mindestens ein Maschinenteil der Rührwerkskugelmühle an der Aufnahmeeinheit anzuordnen und an einer Lagerposition zu positionieren und anschließend mindestens ein weiteres Maschinenteil an dem von der Aufnahmeeinheit gelösten Transportmittel anzuordnen.

Beispielsweise wird bei der Demontage einer Rührwerkskugelmühle im Rahmen von Wartungsarbeiten mit Hilfe der Handhabungsvorrichtung folgendermaßen vorgegangen: Die Handhabungsvorrichtung wird an der Rührwerkskugelmühle positioniert, so dass die dritte Aufnahmevorrichtung, insbesondere die Aufnahmewanne für die Mahlkörper unterhalb des Mahlbehälters angeordnet ist. Nun wird beispielsweise ein Grobauslass am Mahlbehälter geöffnet und die innerhalb des Mahlbehälters befindlichen Mahlkörper werden abgelassen.

Anschließend wird die Handhabungsvorrichtung derart an die Rührwerkskugelmühle herangeschoben, dass der Mahlbehälterboden durch die erste Aufnahmevorrichtung gehalten wird. Gegebenenfalls wird über den Höhenverstellmechanismus des Transportmittels auch die Höhe der Aufnahmeeinheit entsprechend angepasst.

Beispielsweise kann die erste Aufnahmevorrichtung geeignete Aufnahmen umfassen, in die Teile des Mahlbehälterbodens eingreifen oder ähnliches. Die Befestigungsmittel zur Fixierung des Mahlbehälterbodens am Mahlbehälter werden vom Benutzer gelöst. Anschließend wird die Handhabungsvorrichtung zumindest so weit von der Rührwerkskugelmühle weg verfahren, dass der Mahlbehälterboden vom Mahlbehälter abgenommen ist.

Nunmehr kann auf oder in der dritten Aufnahmevorrichtung eine zweite Aufnahmevorrichtung zur Positionierung und / oder Fixierung des Mahlbehälters angeordnet und die Handhabungsvorrichtung wiederum so unterhalb des Mahlbehälters positioniert werden, dass die erste Aufnahmevorrichtung von unten an den Mahlbehälter gehoben werden kann, so dass dieser darauf aufliegt. Nun werden die Befestigungsmittel zur Fixierung des Mahlbehälters gelöst. Durch Wegfahren der Handhabungsvorrichtung wird nunmehr der Mahlbehälter von der Rührwerkskugelmühle abgenommen. Die Handhabungsvorrichtung kann nun durch den Benutzer an einem geeigneten Zwischenlagerplatz positioniert werden.

Durch Absenken der horizontalen Auflagefläche des Transportmittels wird die Wirkverbindung zwischen dem Transportmittel und der Aufnahmeeinheit gelöst. Während die Aufnahmeeinheit nunmehr ortsfest an dem Zwischenlagerplatz angeordnet ist, kann das Transportmittel erneut an der Rührwerkskugelmühle positioniert werden.

Um die Rührwelle abzunehmen, wird die horizontale Auflagefläche des Transportmittels auf eine geeignete Höhe gebracht und es kann beispielsweise eine geeignete vierte Aufnahmevorrichtung auf der horizontalen Auflagefläche des Transportmittels angeordnet werden. Die vierte Aufnahmevorrichtung ist dergestalt ausgebildet, dass die Rührwelle auf der horizontalen Auflagefläche zumindest teilweise fixiert ist, insbesondere verhindert die vierte Aufnahmevorrichtung ein Wegrollen der Rührwelle auf der horizontalen Auflagefläche. Nach Lösen der Befestigungsmittel zur Fixierung der Rührwelle kann diese nun durch Verfahren des Transportmittels von der Rührwerkskugelmühle abgenommen werden.

Das Verfahren kann alternativ oder zusätzlich zu den beschriebenen Merkmalen ein oder mehrere Merkmale und / oder Eigenschaften der zuvor beschriebenen Vorrichtung umfassen. Ebenfalls kann die Vorrichtung alternativ oder zusätzlich einzelne oder mehrere Merkmale und / oder Eigenschaften des beschriebenen Verfahrens aufweisen.

Die erfindungsgemäße Handhabungsvorrichtung erleichtert insbesondere den Umgang mit Maschinenteilen einer Rührwerkskugelmühle und / oder mit den in einer Rührwerkskugelmühle verwendeten Mahlkörpern. Insbesondere erlaubt die Handhabungsvorrichtung dem Benutzer eine erleichterte Demontage einer Mehrzahl von schweren Maschinenbauteilen der Rührwerkskugelmühle mit einer einzigen Hilfseinrichtung.

### Figurenbeschreibung

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1 bis 7 zeigen die Verwendung einer erfindungsgemäßen Handhabungsvorrichtung bei der Wartung einer Rührwerkskugelmühle.
Figur 8 zeigt eine perspektivische Darstellung einer erfindungsgemäßen Handhabungsvorrichtung in einem zweiten Arbeitszustand.
Figuren 9 bis 11 zeigen verschiedene perspektivische Darstellungen einer erfindungsgemäßen Handhabungsvorrichtung in einem ersten Arbeitszustand.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

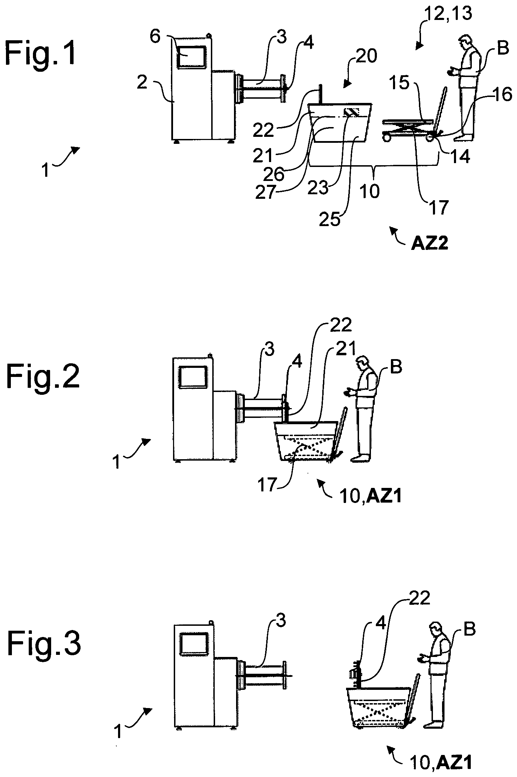

Figuren 1 bis 7 zeigen die Verwendung einer erfindungsgemäßen Handhabungsvorrichtung 10 bei der Wartung einer Rührwerkskugelmühle 1, insbesondere bei der zumindest teilweisen Demontage einer Rührwerkskugelmühle 1, beispielsweise im Rahmen einer Reparatur oder ähnlichem. Die Rührwerkskugelmühle 1 umfasst ein Maschinengehäuse 2, in dem der Antrieb der Rührwerkskugelmühle 1 (nicht dargestellt), die Maschinensteuerung und weitere Maschinenkomponenten angeordnet sind. Beispielsweise ist am Maschinengehäuse 2 ein Bedienpult 6 vorgesehen, über das die Rührwerkskugelmühle 1 gesteuert werden kann.

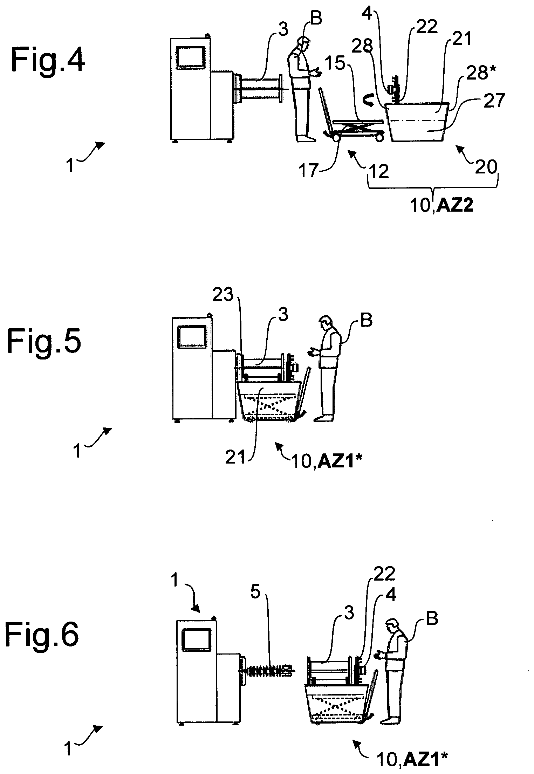

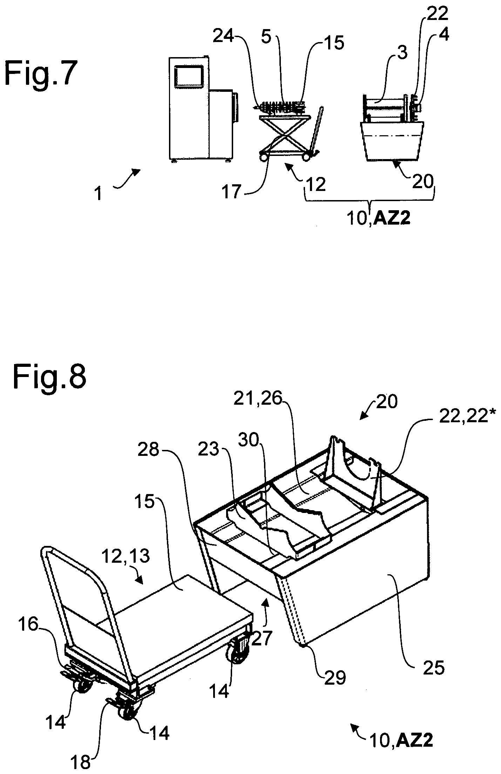

Die Rührwerkskugelmühle 1 umfasst weiterhin einen Mahlbehälter 3, in dem der Mahlprozess stattfindet. Der Mahlbehälter 3 ist zylindrisch ausgebildet und liegend angeordnet, wobei ein Ende des Mahlbehälters 3 in verschiedenen Stellungen bzw. Ausrichtungen am Maschinengehäuse 2 befestigt werden kann. Das gegenüberliegende freie Ende des Mahlbehälters 3, an dem sich in der Regel der Produktauslass befindet, ist mit einem Behälterboden 4 verschlossen. Um beispielsweise Wartungsarbeiten an der Rührwelle 5 (vergleiche Figuren 6 und 7) der Rührwerkskugelmühle 1 durchzuführen, muss zuerst der Behälterboden 4 und anschließend der Mahlbehälter 3 von dem Maschinengehäuse 2 der Rührwerkskugelmühle 1 gelöst und abgenommen werden.

Um die Handhabung von Behälterboden 4, Mahlbehälter 3 und Rührwelle 5 für den Benutzer B zu erleichtern, ist eine Handhabungsvorrichtung 10 vorgesehen. Diese besteht im Wesentlichen aus zwei Funktionseinheiten, insbesondere einem Transportmittel 12 und einer Aufnahme- und Lagereinheit 20, die in den Figuren 1, 4, 7 und 8 jeweils einzeln dargestellt sind. Die Figuren 2, 3, 5, 6 und 9 bis 11 zeigen dagegen die Handhabungsvorrichtung 10, wobei die Aufnahme- und Lagereinheit 20 lösbar an dem Transportmittel 12 angeordnet ist.

Das Transportmittel 12 ist beispielsweise eine Art Scherenhubwagen 13 mit Rädern 14 und mit einer oberen horizontalen Auflagefläche 15. Weiterhin ist mindestens ein Einstellmittel 16 zur Betätigung und Einstellung des Scherenhubmechanismus 17 vorgesehen. Über das Einstellmittel 16 kann vermittels des Scherenhubmechanismus 17 ein beliebiges Vertikalniveau der horizontalen Auflagefläche 15 eingestellt werden, das heißt die horizontale Auflagefläche 15 kann in unterschiedlichen Höhen positioniert werden.

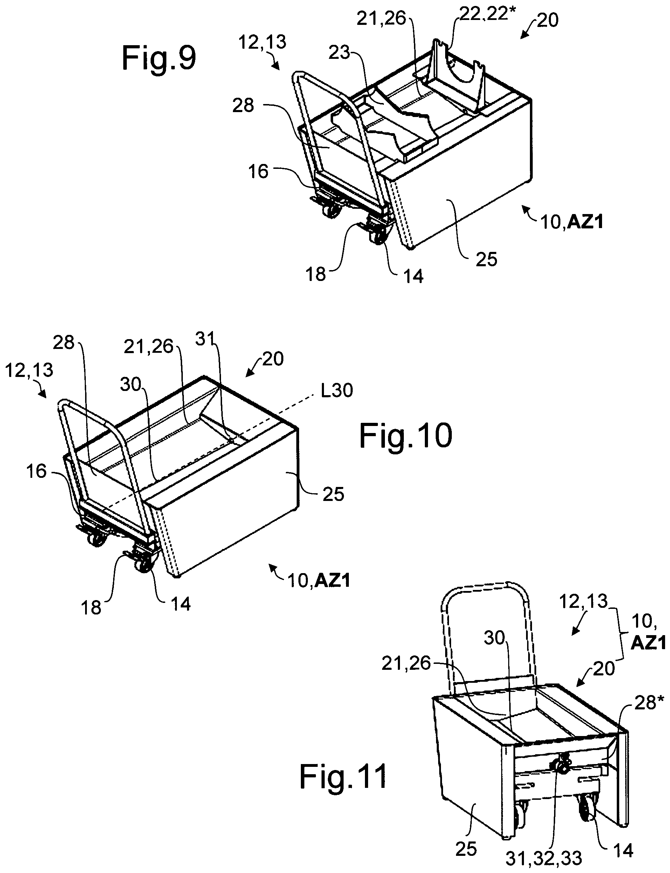

Die Aufnahme- und Lagereinheit 20 umfasst eine obere Aufnahmewanne 21, insbesondere zur Aufnahme von aus der Rührwerkskugelmühle 1 abgelassenen Mahlkörpern, weiterhin umfasst die Aufnahme- und Lagereinheit 20 im dargestellten Ausführungsbeispiel ein erstes Aufnahmemittel 22 für den Behälterboden 4 der Rührwerkskugelmühle 1 und ein zweites Aufnahmemittel 23 für den Mahlbehälter 3 der Rührwerkskugelmühle 1. Zwei parallele seitlichen Begrenzungen 25 der Aufnahmewanne 21 ragen nach unten über den Boden 26 der Aufnahmewanne 21 hinaus, so dass unterhalb der Aufnahmewanne 21 ein Hohlraum 27 (vergleiche Figur 8) ausgebildet ist. Eine zwischen den parallelen seitlichen Begrenzungen angeordnete dritte Querbegrenzung der Aufnahmewanne 21 kann ebenfalls nach unten über den Boden 26 der Aufnahmewanne 21 hinausragend ausgebildet sein. Dagegen schließt einer vierte Querbegrenzung der Aufnahmewanne 21 zumindest bereichsweise nach unten mit dem Boden 26 der Aufnahmewanne 21 ab. Vorzugsweise schließen sowohl die dritte als auch die vierte Querbegrenzung 28, 28* (vergleiche Figuren 8 und 11) zumindest bereichsweise nach unten mit dem Boden 26 der Aufnahmewanne 21 ab. Durch die verlängerten seitlichen Begrenzungen 25 in Kombination mit mindestens einer verkürzten Querbegrenzung 28, 28* (vergleiche Figuren 8 und 11) wird unterhalb der Aufnahmewanne 21 ein Hohlraum 27 ausgebildet, der zumindest eine, vorzugsweise zwei einander gegenüberliegende, seitliche Öffnungen aufweist.

Vorzugsweise ragen die zwei parallelen Seitenbegrenzungen und gegebenenfalls die dritte Querbegrenzung jeweils gleich nach unten über den Boden hinaus und bilden somit Standmittel. Alternativ und / oder zusätzlich kann die Verwendung von Füßen an den Schnittpunkten zwischen den parallelen Seitenbegrenzungen und der dritten Querbegrenzung bzw. dem Bereich der vierten Seitenbegrenzung vorteilhaft sein.

Figur 1 zeigt die Handhabungsvorrichtung 10 in einem zweiten Arbeitszustand AZ2. In dem zweiten Arbeitszustand AZ2 besteht keine Wirkverbindung zwischen der Aufnahme- und Lagereinheit 20 und dem Transportmittel 12, so dass das Transportmittel 12 unabhängig von der Aufnahmeeinheit 20 angeordnet und bewegt werden kann.

Das Transportmittel 12 wird von der vierten Seite her unter die Aufnahmewanne 21 eingeschoben. Insbesondere wird das Transportmittel 12 zumindest teilweise in den unterhalb der Aufnahmewanne 21 ausgebildeten Hohlraum 27 eingeschoben. Anschließend wird die Höhe der horizontalen Auflagefläche 15 des Transportmittels 12 mit Hilfe eines Einstellmittels 16 derart eingestellt, dass die Aufnahmewanne 21 zumindest bereichsweise auf der horizontalen Auflagefläche 15 aufliegt und somit eine Wirkverbindung zwischen dem Transportmittel 12 und der Aufnahme- und Lagereinheit 20 besteht. Dies stellt den ersten Arbeitszustand AZ1 der Handhabungsvorrichtung 10 dar, wie es beispielsweise in den Figuren 2 und 3 dargestellt ist. Vorzugsweise wird die horizontale Auflagefläche 15 noch weiter angehoben, so dass die Aufnahme- und Lagereinheit 20 zusätzlich angehoben wird und nicht mehr auf dem Boden aufsteht. Die Aufnahme- und Lagereinheit 20 kann nun zusammen mit dem Transportmittel 12 problemlos verschoben werden.

Figur 2 zeigt die Anordnung einer Handhabungsvorrichtung 10 an einer Rührwerkskugelmühle 1. Die Handhabungsvorrichtung 10 wird derart positioniert, dass der Behälterboden 4 durch die Aufnahmemittel 22 gehalten wird. Hierzu kann es notwendig sein, die Aufnahme- und Lagereinheit 20 über einen Scherenhubmechanismus 17 des Transportmittels in einer geeigneten Höhe zu positionieren. Der Benutzer B kann nunmehr die Fixierung des Behälterbodens 4 lösen und diesen durch Wegfahren der Handhabungsvorrichtung 10 vom Mahlbehälter 3 der Rührwerkskugelmühle 1 abnehmen (vergleiche Figur 3). Die dabei aus dem Mahlbehälter 3 austretenden Mahlkörper werden in der Aufnahmewanne 21 aufgefangen. Alternativ kann vorgesehen sein, dass der Mahlbehälter 3 oder der Behälterboden 4 eine Auslassöffnung (nicht dargestellt) zum Auslassen der Mahlkörper aufweist, die vor dem Entfernen des Behälterbodens 4 geöffnet und die Mahlkörper kontrolliert aus dem Mahlbehälter 3 abgelassen werden.

Gemäß einer in den Figuren dargestellten Ausführungsform schließen beide, die zwei parallelen nach unten verlängerten Seitenbegrenzungen 25 verbindenden Querbegrenzungen 28, 28* (vergleiche Figuren 8 und 11) jeweils zumindest bereichsweise nach unten mit dem Boden 26 der Aufnahmewanne 21 ab. Dadurch werden die gegenüberliegenden Öffnungen des Hohlraums 27 gebildet und das Transportmittel 12 kann sowohl von der Seite der dritten Querbegrenzung 28 her als auch von der Seite der vierten Querbegrenzung 28* her in den Hohlraum 27 unterhalb der Aufnahmewanne 21 der Aufnahme- und Lagereinheit 20 eingeschoben werden.

Gemäß einer weiteren (nicht dargestellten Ausführungsform) sind die nach unten verlängerten Seitenbegrenzungen 25 schräg zueinander angeordnet und / oder weisen eine gebogene Form auf oder Ähnliches, das heißt die Seitenbegrenzungen 25 müssen nicht zwingend parallel zueinander angeordnet sein.

Gemäß Figur 4 verschiebt der Benutzer B die Handhabungsvorrichtung 10 mit dem darauf angeordneten Behälterboden 4 in einen Arbeitsbereich, an dem ausreichend Platz vorhanden ist, um die Handhabungsvorrichtung 10 drehen zu können. Anschließend senkt er die horizontale Auflagefläche 15 des Transportmittels 12 mit Hilfe des Scherenhubmechanismus 17 ab und fährt das Transportmittel 12 unter der Aufnahmewanne 21 der Aufnahme- und Lagereinheit 20 heraus. Nunmehr fährt der Benutzer B das Transportmittel 12 von der gegenüberliegenden Seite unter die Aufnahmewanne 21 der Aufnahme- und Lagereinheit 20 und stellt gemäß Figur 5 über den Scherenhubmechanismus 17 die Wirkverbindung zwischen der Aufnahme- und Lagereinheit 20 und dem Transportmittel 12 durch Auflage der Aufnahmewanne 21 auf die horizontalen Auflagefläche 15 wieder her, so dass die Handhabungsvorrichtung 10 nunmehr einen alternativen ersten Arbeitszustand AZ1* einnimmt.

Innerhalb der Aufnahmewanne 21 sind weitere Aufnahmemittel 23 (vergleiche Figur 1) für den Mahlbehälter 3 vorgesehen. Alternativ kann vorgesehen sein, dass Aufnahmemittel 23 für den Mahlbehälter 3 für diesen Arbeitsschritt durch den Benutzer in der Aufnahmewanne 21 angeordnet werden. Die Handhabungsvorrichtung 10 wird gemäß Figur 5 nunmehr durch den Benutzer B derart an der Rührwerkskugelmühle 1 positioniert, dass der Mahlbehälter 3 durch die Aufnahmemittel 23 in der Aufnahmewanne 21 gehalten wird. Anschließend kann der Benutzer B die Fixierungen des Mahlbehälters 3 an der Rührwerkskugelmühle 1 lösen und diesen gemäß Figur 6 durch Verfahren der Handhabungsvorrichtung 10 abnehmen, so dass die Rührwelle 5 freiliegt.

Soll in einem weiteren Arbeitsschritt die Rührwelle 5 ebenfalls von der Rührwerkskugelmühle 1 entfernt werden, so verfährt der Benutzer B die Handhabungsvorrichtung 10 an eine geeignete Lagerposition und löst die Wirkverbindung zwischen dem Transportmittel 12 und der Aufnahme- und Lagereinheit 20. Die Aufnahme- und Lagereinheit 20 verbleibt an der Lagerposition. Der Benutzer positioniert nun gemäß Figur 7 Aufnahmemittel 24 für die Rührwelle 5 auf der horizontalen Auflagefläche 15 des Transportmittels 12. Um die Rührwelle 5 abzunehmen und sicher durch die Aufnahmemitteln 24 auf der horizontalen Auflagefläche 15 des Transportmittels 12 zu positionieren, wird diese - wie in Figur 7 dargestellt - über den Scherenhubmechanismus 17 in eine geeignete Höhe gebracht.

Figur 8 zeigt eine perspektivische Darstellung einer erfindungsgemäßen Handhabungsvorrichtung 10 in einem zweiten Arbeitszustand AZ2, bei dem die physikalische Wirkverbindung zwischen der Aufnahme- und Lagereinheit 20 und dem Transportmittel 12 aufgehoben ist (vergleiche Figuren 1 und 4).

Insbesondere ist in der Darstellung erkennbar, dass die Aufnahme- und Lagereinheit 20 eine Aufnahmewanne 21 mit einem Aufnahmemittel 22 für einen Behälterboden (nicht dargestellt) einer Rührwerkskugelmühle 1 (vergleiche Figuren 1 bis 7) umfasst. Beispielsweise ist das Aufnahmemittel 22 nur in die Aufnahmewanne 21 eingesetzt bzw. aufgesetzt (vergleiche auch Figuren 10 und 11). Somit kann die Position des Aufnahmemittels 22 an die jeweilig zu wartenden Rührwerkskugelmühle angepasst werden bzw. das Aufnahmemittel 22 kann entsprechend gegen ein anderes geeignetes Aufnahmemittel 22* ausgetauscht werden.

Weiterhin sind Aufnahmemittel 23 für den Mahlbehälter (nicht dargestellt) gezeigt. Diese sind vorzugsweise ebenfalls nur in die Aufnahmewanne 21 eingesetzt bzw. aufgesetzt und somit positionsvariabel. Weiterhin kann das Aufnahmemittel 23 einfach entfernt werden, wenn es nicht benötigt wird (vergleiche auch Figuren 10 und 11). Weiterhin ist dargestellt, dass zwei parallele seitliche Begrenzungen 25 der Aufnahmewanne 21 unterhalb einer Bodenfläche 26 der Aufnahmewanne 21 verlängert sind, während verbindende Querflächen 28 jeweils weitgehend mit der Bodenfläche 26 abschließen. Dadurch ergibt sich unterhalb der Bodenfläche 26 ein Hohlraum 27 und unterhalb der Querflächen 28 ergibt sich jeweils eine Öffnung, über die das Transportmittel 12 zumindest teilweise in den Hohlraum 27 unter die Aufnahmewanne 21 der Aufnahme- und Lagereinheit 20 eingeschoben werden kann.

Alternativ kann vorgesehen sein, dass die Aufnahmemittel 22, 22*, 23 jeweils durch geeignete Sicherungsmittel, beispielsweise durch eine Verschraubung oder ähnlichem in oder an der Aufnahmewanne 21 fixiert werden können, um somit ein Verrutschen beim Transport von Behälterboden 4 und / oder Mahlbehälter 3 zu verhindern.

Zur Erhöhung der Standfestigkeit der Aufnahme- und Lagereinheit 20 im zweiten Arbeitszustand (vergleiche Figuren 1, 4 und 7) sind an der Aufnahme- und Lagereinheit 20 weiterhin Standfüße 29 vorgesehen. Diese können jeweils in ihrer Höhe justierbar sein. Damit kann beispielsweise ein sicherer Stand der Aufnahme- und Lagereinheit 20 auch auf einem unebenen Untergrund ermöglicht werden.

Alternativ kann vorgesehen sein, die Aufnahmewanne 21 vergleichbar mit einem Tisch auf vier Beinen anzuordnen, so dass das Transportmittel 12 zwischen den Beinen der Aufnahme- und Lagereinheit 20 eingeschoben werden kann.

Das Transportmittel 12 ist ein Scherenhubwagen 13 mit Rädern 14 und mit einer oberen horizontalen Auflagefläche 15. Der in der Darstellung nicht sichtbare Scherenhubmechanismus kann über ein Einstellmittel 16 eingestellt werden. Insbesondere kann die horizontale Auflagefläche 15 in unterschiedlichen Höhen positioniert werden.

Weiterhin sind Fixiermittel 18 an den Rädern angeordnet. Damit kann das Transportmittel 12 beziehungsweise die Handhabungsvorrichtung 10 im ersten Arbeitszustand AZ1 an einem gewünschten Standort vor einem ungewünschten Verfahren gesichert werden.

Figuren 9 bis 11 zeigen verschiedene perspektivische Darstellungen einer erfindungsgemäßen Handhabungsvorrichtung 10 in einem ersten Arbeitszustand AZ1. Es wird auf die Beschreibung der Figuren 1 bis 8 Bezug genommen. Insbesondere wurden in den Figuren 10 und 11 die Aufnahmemittel 22, 23 von der Aufnahmewanne 21 entfernt, beispielsweise um die Aufnahmemittel 22, 23 und / oder die Aufnahmewanne 21 reinigen zu können.

In den Figuren 9 bis 11 kann man erkennen, dass die Aufnahmewanne 22 keine ebene Fläche ausbildet, sondern eine Aufnahmerinne 30 ausgebildet hat. Zudem ist die Aufnahmerinne entlang ihrer Längsachse L30 in Richtung eines Ablaufs 31 geneigt. Der Ablauf ist über ein Verschlussmittel 32, beispielsweise vermittels eines Schraubverschluss verschlossen. Vorzugsweise ist das Verschlussmittel an einer Querbegrenzung 28* angeordnet, die die beiden seitlichen Begrenzungen 25 miteinander verbindet. Um die aus dem Mahlbehälter der Rührwerkskugelmühle abgelassenen Mahlkörper aus den Aufnahmewanne 21 zu entfernen, wird der Ablauf 31 geöffnet und die Mahlkörper können beispielsweise mit Wasser oder einem anderen geeigneten Mittel herausgespült und in einem geeigneten Auffangbehälter gesammelt werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Rührwerkskugelmühle
- 2: Maschinengehäuse
- 3: Mahlbehälter
- 4: Behälterboden
- 5: Rührwelle
- 6: Bedienpult
- 10: Handhabungsvorrichtung
- 12: Transportmittel
- 13: Scherenhubwagen
- 14: Räder
- 15: horizontale Auflagefläche
- 16: Einstellmittel
- 17: Scherenhubmechanismus
- 18: Fixiermittel
- 20: Aufnahme- und Lagereinheit
- 21: Aufnahmewanne
- 22: Aufnahmemittel für Behälterboden
- 23: Aufnahmemittel für Mahlbehälter
- 24: Aufnahmemittel für Rührwelle
- 25: seitliche Begrenzungen
- 26: Boden / Bodenfläche
- 27: Hohlraum
- 28: Querfläche / Querbegrenzung
- 29: Standfuß
- 30: Aufnahmerinne
- 31: Ablauf
- 32: Verschlussmittel
- 33: Schraubverschluss
- AZ: Arbeitszustand
- B: Benutzer

## Patentansprüche

1. Handhabungsvorrichtung (10) zur Wartung von Rührwerkskugelmühlen (1) mit einem liegend angeordneten Mahlbehälter (3), wobei die Handhabungsvorrichtung (10) ein Transportmittel (12) und mindestens eine Aufnahmeeinheit (20) für Maschinenteile einer Rührwerkskugelmühle (1) umfasst, wobei das Transportmittel (12) lösbar mit der Aufnahmeeinheit (20) verbunden ist, **dadurch gekennzeichnet, dass** die Aufnahmeeinheit (20) mindestens eine erste Aufnahmevorrichtung (22) für einen Mahlbehälterdeckel bzw. einen Mahlbehälterboden (4) der Rührwerkskugelmühle (1) und eine zweite Aufnahmevorrichtung (23) für den Mahlbehälter (3) der Rührwerkskugelmühle (1) und eine dritte Aufnahmevorrichtung für Mahlkörper der Rührwerkskugelmühle (1) umfasst, wobei die zweite Aufnahmevorrichtung als Auflage und die dritte Aufnahmevorrichtung durch eine Aufnahmewanne (21) gebildet ist, und wobei die erste Aufnahmevorrichtung (22) und die zweite Aufnahmevorrichtung (23) in und/oder auf der Aufnahmewanne (21) angeordnet sind.

2. Handhabungsvorrichtung (10) nach Anspruch 1, in einem ersten Arbeitszustand (AZ1) eine Wirkverbindung zwischen der Aufnahmeeinheit (20) und dem Transportmittel (12) ausgebildet ist, insbesondere wobei in einem ersten Arbeitszustand (AZ1) die Aufnahmeeinheit (20) derart am Transportmittel (12) angeordnet ist, dass die Aufnahmeeinheit (20) und das Transportmittel (12) gemeinsam beweglich sind.

3. Handhabungsvorrichtung (10) nach Anspruch 2, wobei in einem zweiten Arbeitszustand (AZ2) die Wirkverbindung zwischen der Aufnahmeeinheit (20) und dem Transportmittel (12) gelöst ist, so dass das Transportmittel (12) unabhängig von der Aufnahmeeinheit (20) beweglich ist.

4. Handhabungsvorrichtung (10) nach einem der voranstehenden Ansprüche, wobei das Transportmittel (12) höhenverstellbar ist.

5. Handhabungsvorrichtung (10) nach Anspruch 4, wobei das Transportmittel (12) eine Horizontalebene (15) umfasst, wobei die Höhe der Horizontalebene (15) des Transportmittels (12) einstellbar ist.

6. Handhabungsvorrichtung (10) nach Anspruch 5, wobei auf der Horizontalebene (15) des Transportmittels (12) Aufnahme- und / oder Positioniermittel (24) für eine Rührwelle (5) der Rührwerkskugelmühle (1) anordenbar sind.

7. Handhabungsvorrichtung (10) nach einem der Ansprüche 3 bis 6, wobei mindestens eine Größe der mindestens einen Aufnahmevorrichtung (21) für Mahlkörper der Rührwerkskugelmühle (1) durch eine ausziehbare Aufnahmewanne (21) einstellbar ist, insbesondere wobei die Größe einer Horizontalfläche der Aufnahmevorrichtung (21) einstellbar ist.

8. Handhabungsvorrichtung (10) nach Anspruch 5 und 7, wobei die Aufnahmeeinheit (20) in dem ersten Arbeitszustand (AZ1) zumindest teilweise auf der Horizontalebene (15) des Transportmittels (12) aufsitzt.

9. Handhabungsvorrichtung (10) nach Anspruch 5, wobei die Aufnahmeeinheit (20) in dem ersten Arbeitszustand (AZ1) durch das Transportmittel (12) in unterschiedlichen Höhen positionierbar ist.

10. Handhabungsvorrichtung (10) nach Anspruch 5, wobei in dem zweiten Arbeitszustand (AZ2) ein Abstand zwischen der Horizontalebene (15) des Transportmittels (12) und der Aufnahmeeinheit (20) ausgebildet ist.

11. Handhabungsvorrichtung (10) nach Anspruch 5, wobei die Aufnahmeeinheit (20) in dem zweiten Arbeitszustand (AZ2) ortsfest ausgebildet ist und wobei das Transportmittel (12) in dem zweiten Arbeitszustand (AZ2) allein beweglich ausgebildet ist.

12. Verfahren zum Warten einer Rührwerkskugelmühle (1) unter Verwendung einer Handhabungsvorrichtung (10) nach einem der voranstehenden Ansprüche.

13. Verfahren nach Anspruch 12, wobei mindestens ein Maschinenteil (3, 4) der Rührwerkskugelmühle (1) an der Aufnahmeeinheit (20) der Handhabungsvorrichtung (10) angeordnet wird und wobei mindestens ein weiteres Maschinenteil (5) der Rührwerkskugelmühle (1) an dem von der Aufnahmeeinheit (20) gelösten Transportmittel (12) angeordnet wird.

## Claims

1. A handling device (10) for the maintenance of agitator ball mills (1) comprising a horizontally arranged grinding container (3), wherein the handling device (10) comprises a transport means (12) and at least one receiving unit (20) for machine parts of an agitator ball mill (1), wherein the transport means (12) is detachably connected to the receiving unit (20), **characterized in that** the receiving unit (20) comprises at least one first receiving device (22) for a grinding container cover or a grinding container bottom (4), respectively, of the agitator ball mill (1) and a second receiving device (23) for the grinding container (3) of the agitator ball mill (1) and a third receiving device for grinding bodies of the agitator ball mill (1), wherein the second receiving device is formed as support and the third receiving device by a receiving trough (21), and wherein the first receiving device (22) and the second receiving device (23) are arranged in and/or on the receiving trough (21).

2. The handling device (10) according to claim 1, an operative connection between the receiving unit (20) and the transport means (12) is formed in a first operating state (AZ1), in particular wherein the receiving unit (20) is arranged on the transport means (12) in a first operating state (AZ1) in such a way that the receiving unit (20) and the transport means (12) can be moved together.

3. The handling device (10) according to claim 2, wherein the operative connection between the receiving unit (20) and the transport means (12) is released in a second operating state (AZ2), so that the transport means (12) can be moved independently of the receiving unit (20).

4. The handling device (10) according to one of the preceding claims, wherein the transport means (12) is height-adjustable.

5. The handling device (10) according to claim 4, wherein the transport means (12) comprises a horizontal plane (15), wherein the height of the horizontal plane (15) of the transport means (12) is adjustable.

6. The handling device (10) according to claim 5, wherein receiving and/or positioning means (24) for an agitator shaft (5) of the agitator ball mill (1) can be arranged on the horizontal plane (15) of the transport means (12) .

7. The handling device (10) according to one of claims 3 to 6, wherein at least one size of the at least one receiving device (21) for grinding bodies of the agitator ball mill (1) is adjustable by means of an extendable receiving trough (21), in particular wherein the size of a horizontal surface of the receiving device (21) is adjustable.

8. The handling device (10) according to claim 5 and 7, wherein the receiving unit (20) in the first operating state (AZ1) sits at least partially on the horizontal plane (15) of the transport means (12).

9. The handling device (10) according to claim 5, wherein the receiving unit (20) in the first operating state (AZ1) can be positioned at different heights by means of the transport means (12).

10. The handling device (10) according to claim 5, wherein a distance between the horizontal plane (15) of the transport means (12) and the receiving unit (20) is formed in the second operating state (AZ2).

11. The handling device (10) according to claim 5, wherein the receiving unit (20) in the second operating state (AZ2) is formed in a stationary manner and wherein the transport means (12) in the second operating state (AZ2) is alone formed in a movable manner.

12. A method for maintaining an agitator ball mill (1) using a handling device (10) according to one of the preceding claims.

13. The method according to claim 12, wherein at least one machine part (3, 4) of the agitator ball mill (1) is arranged on the receiving unit (20) of the handling device (10), and wherein at least one further machine part (5) of the agitator ball mill (1) is arranged on the transport means (12), which is released from the receiving unit (20).

## Revendications

1. Dispositif de manipulation (10) pour l'entretien de broyeurs agitateurs à billes (1) avec récipient de broyage (3) disposé horizontalement, le dispositif de manipulation (10) comportant un moyen de transport (12) et au moins une unité de réception (20) pour des pièces de machine d'un broyeur agitateur à billes (1), le moyen de transport (12) étant relié de façon amovible à l'unité de réception (20), **caractérisé en ce que** l'unité de réception (20) comporte au moins un premier dispositif de réception (22) pour un couvercle de récipient de broyage ou un fond de récipient de broyage (4) du broyeur agitateur à billes (1), ainsi qu'un deuxième dispositif de réception (23) pour le récipient de broyage (3) du broyeur agitateur à billes (1) et un troisième dispositif de réception pour des corps de broyage du broyeur agitateur à billes (1), le deuxième dispositif de réception étant formé comme un support et le troisième dispositif de réception étant formé par une cuve de réception (21), et le premier dispositif de réception (22) et le deuxième dispositif de réception (23) étant disposés dans et/ou sur la cuve de réception (21) .

2. Dispositif de manipulation (10) selon la revendication 1, dans lequel, dans un premier état de fonctionnement (AZ1), une liaison active est établie entre l'unité de réception (20) et le moyen de transport (12), en particulier dans lequel, dans un premier état de fonctionnement (AZ1), l'unité de réception (20) est disposée de telle façon sur le moyen de transport (12), que l'unité de réception (20) et le moyen de transport (12) sont déplaçables conjointement.

3. Dispositif de manipulation (10) selon la revendication 2, dans lequel, dans un deuxième état de fonctionnement (AZ2), la liaison active entre l'unité de réception (20) et le moyen de transport (12) est défaite, de telle façon que le moyen de transport (12) peut être déplacé indépendamment de l'unité de réception (20).

4. Dispositif de manipulation (10) selon l'une des revendications précédentes, dans lequel le moyen de transport (12) est réglable en hauteur.

5. Dispositif de manipulation (10) selon la revendication 4, dans lequel le moyen de transport (12) comporte un plan horizontal (15), la hauteur du plan horizontal (15) du moyen de transport (12) étant réglable.

6. Dispositif de manipulation (10) selon la revendication 5, dans lequel des moyens de réception et/ou de positionnement (24) pour un arbre d'agitateur (5) du broyeur agitateur à billes (1) peuvent être disposés sur le plan horizontal (15) du moyen de transport (12).

7. Dispositif de manipulation (10) selon l'une des revendications 3 à 6, dans lequel au moins une taille de l'au moins un dispositif de réception (21) pour des corps de broyage du broyeur agitateur à billes (1) peut être réglée par une cuve de réception (21) extractible, en particulier dans lequel la taille d'une surface horizontale du dispositif de réception (21) est réglable.

8. Dispositif de manipulation (10) selon les revendications 5 et 7, dans lequel l'unité de réception (20) repose au moins partiellement sur le plan horizontal (15) du moyen de transport (12) dans le premier état de fonctionnement (AZ1).

9. Dispositif de manipulation (10) selon la revendication 5, dans lequel l'unité de réception (20) peut être positionnée à différentes hauteurs par le moyen de transport (12) dans le premier état de fonctionnement (AZ1) .

10. Dispositif de manipulation (10) selon la revendication 5, dans lequel, dans le deuxième état de fonctionnement (AZ2), un écart est formé entre le plan horizontal (15) du moyen de transport (12) et l'unité de réception (20).

11. Dispositif de manipulation (10) selon la revendication 5, dans lequel l'unité de réception (20) est formée de façon stationnaire dans le deuxième état de fonctionnement (AZ2), et dans lequel le moyen de transport (12) est conçu de manière à pouvoir se déplacer seul dans le deuxième état de fonctionnement (AZ2) .

12. Procédé pour l'entretien d'un broyeur agitateur à billes (1) à l'aide d'un dispositif de manipulation (10) selon l'une des revendications précédentes.

13. Procédé selon la revendication 12, dans lequel au moins une pièce de machine (3, 4) du broyeur agitateur à billes (1) est disposée sur l'unité de réception (20) du dispositif de manipulation (10), et dans lequel au moins une autre pièce de machine (5) du broyeur agitateur à billes (1) est disposée sur le moyen de transport (12) détaché de l'unité de réception (20).
